# EUROPEAN PATENT APPLICATION

(11) **EP 4 465 669 A1**
(43) Date of publication of application: **20.11.2024**
(21) Application number: 22919488.1
(22) Date of filing: 14.01.2022
(51) Int. Cl.: H04W 8/00

(54) **METHOD AND APPARATUS FOR DETERMINING NUMBER OF REGISTERED USERS, COMMUNICATION DEVICE AND STORAGE MEDIUM**

(71) Applicant: Beijing Xiaomi Mobile Software Co., Ltd., Beijing 100085 (CN)
(72) Inventor: SHEN, Yang, Beijing 100085 (CN)
(74) Representative: Gunzelmann, Rainer
(86) International application number: PCT/CN2022/072120
(87) International publication number: WO 2023/133838

(57) **Abstract**

Provided in the embodiments of the present disclosure is a method for determining the number of registered users. The method is executed by a first network device, and the method comprises: determining the number of registered users for different access types on the basis of access type information, the access type information indicating an access type of a terminal to access a network slice.

## Description

### TECHNICAL FIELD

The disclosure relates to but is not limited to the technical field of wireless communication, and more particularly, to a method and an apparatus for determining a number of registered users, a communication device, and a storage medium.

### BACKGROUND

Network slices can provide complete network functions, such as a radio access network function, a core network function, and an Internet Protocol (IP) multimedia system function. A network can support one or more network slices. Network slices can provide various commitment services and are dedicated to users.

In related art, network slices include registered users of multiple access types. Statistics of all access types may be performed in the network slices. However, this statistical method cannot accurately locate and meet the needs of operational services, especially the requirements of service characteristics in specific scenarios, thus cannot configure resources accordingly according to the network status, or trigger or execute related services, and cannot improve user service experience.

### SUMMARY

Embodiments of the disclosure provide a method and an apparatus for determining a number of registered users, a communication device, and a storage medium.

According to a first aspect of an embodiment of the present disclosure, a method for determining a number of registered users is provided. The method is performed by a first network device, and includes:
determining numbers of registered users for different access types based on access type information;
in which the access type information indicates an access type of a terminal accessing a network slice.

In an embodiment, the access type information includes at least one of:
access type information configured on the first network device;
access type information obtained from a consumer network function;
access type information configured by an operation administration and maintenance (OAM) system; or
access type information obtained from an access and mobility management function (AMF).

In an embodiment, the access type information indicates at least one of:
an access type;
a radio access type (RAT); or
access assistance information (addAccessinfo).

In an embodiment, the access type includes at least one of:
a third generation mobile communication partner project (3GPP) access;
a non-3GPP access; or
a 3GPP and a non-3GPP access.

In an embodiment, the radio access type includes at least one of: a new radio (NR) access, an evolved universal mobile communication system terrestrial radio access (EUTRA), a wireless local area network access (WLAN) access, a virtual network (VIRTUAL) access, a narrowband Internet of Things (NBIOT) access, a wired network (WIRELINE) access, a wired cable network (WIRELINE-CABLE) access, a wired broadband network (WIRELINE-BBF) access, an urban rail transit vehicle-terrestrial integrated communication system (LTE-M) access, a new radio unlicensed spectrum (NR_U) access, an evolved universal mobile communication system terrestrial unlicensed spectrum (EUTRA_U) radio access, a trusted N3GA access (TRUSTED_N3GA), a trusted wireless local area network (TRUSTED_WLAN) access, a universal terrestrial radio access (UTRA), a global mobile system edge radio access network (GERA) access, a new radio low earth orbit (NR_LEO) access, a new radio medium/high earth orbit (NR_MEO) access, a new radio geostationary earth orbit (NR_GEO) access, or a new radio other satellite (NR_OTHER_SAT) access.

In an embodiment, the method further includes:
updating the numbers of registered users for different access types in response to the terminal performing a predetermined procedure;
in which, the preset procedure includes one of:
   a registration procedure of the terminal;
   a configuration update procedure of the terminal; or
   a deregistration procedure of the terminal.

In an embodiment, updating the numbers of registered users for different access types in response to the terminal performing the predetermined procedure includes:
updating the numbers of registered users for different access types in response to the terminal performing the predetermined procedure and receiving a request message for updating a number of users of a slice sent by a second network device;
in which, the request message for updating the number of users of the slice indicates increasing or decreasing the number of registered users.

In an embodiment, the method further includes:
sending a response message of the request message for updating the number of users of the slice to the second network device;
in which the response message carries information about that a number of registered users of an access type reaches a predetermined threshold and/or a number of registered users associated with an access type.

In an embodiment, the method further includes:
in response to receiving a slice event subscription request indicating an access type sent by an application function (AF), sending an event report of the access type to the AF; in which the event report at least indicates a number of registered users associated with the access type.

According to a second aspect of an embodiment of the present disclosure, a method for determining a number of registered users is provided. The method is performed by a second network device. The method includes:
sending a request message for updating a number of users of a slice to a first network device; and
receiving a response message sent by the first network device, in which the response message carries information about that numbers of registered users for different access types of the slice reach a predetermined threshold and/or numbers of registered users for different access types.

In an embodiment, the access type includes at least one of:
a third generation mobile communication partner project (3GPP) access;
a non-3GPP access; or
a 3GPP and a non-3GPP access.

In an embodiment, the radio access type includes at least one of: a new radio (NR) access, an evolved universal mobile communication system terrestrial radio access (EUTRA), a wireless local area network access (WLAN) access, a virtual network (VIRTUAL) access, a narrowband Internet of Things (NBIOT) access, a wired network (WIRELINE) access, a wired cable network (WIRELINE-CABLE) access, a wired broadband network (WIRELINE-BBF) access, an urban rail transit vehicle-terrestrial integrated communication system (LTE-M) access, a new radio unlicensed spectrum (NR_U) access, an evolved universal mobile communication system terrestrial unlicensed spectrum (EUTRA_U) radio access, a trusted N3GA access (TRUSTED_N3GA), a trusted wireless local area network (TRUSTED_WLAN) access, a universal terrestrial radio access (UTRA), a global mobile system edge radio access network (GERA) access, a new radio low earth orbit (NR_LEO) access, a new radio medium/high earth orbit (NR_MEO) access, a new radio geostationary earth orbit (NR_GEO) access, or a new radio other satellite (NR_OTHER_SAT) access.

In an embodiment, the method further includes:
receiving a registration request message sent by a terminal; and
determining whether to reject the registration request message of the terminal based on the number of registered users.

In an embodiment, determining whether to reject the registration request message of the terminal based on the number of registered users includes:
determining to accept the registration request message of the terminal in response to numbers of registered users of partial network slices of requested network slices reaching a predetermined threshold;
   or,
determining to accept the registration request message of the terminal in response to numbers of registered users of all the requested network slices reaching a predetermined threshold and a backup network slice being configured;
   or,
determining to reject the registration request message of the terminal in response to numbers of registered users of all the requested network slices reaching a predetermined threshold and no backup network slice being configured.

According to a third aspect of an embodiment of the present disclosure, a method for determining a number of registered users is provided. The method is performed by a third network device. The method includes:
sending a slice event subscription request indicating an access type to a first network device; in which, the slice event subscription request is used to obtain an event report of the access type, and the event report indicates a number of registered users associated with the access type indicated by the slice event subscription request; and
receiving the event report sent by the first network device for the slice event subscription request.

In an embodiment, the access type includes at least one of:
a third generation mobile communication partner project (3GPP) access;
a non-3GPP access; or
a 3GPP and a non-3GPP access.

In an embodiment, the radio access type includes at least one of: a new radio (NR) access, an evolved universal mobile communication system terrestrial radio access (EUTRA), a wireless local area network access (WLAN) access, a virtual network (VIRTUAL) access, a narrowband Internet of Things (NBIOT) access, a wired network (WIRELINE) access, a wired cable network (WIRELINE-CABLE) access, a wired broadband network (WIRELINE-BBF) access, an urban rail transit vehicle-terrestrial integrated communication system (LTE-M) access, a new radio unlicensed spectrum (NR_U) access, an evolved universal mobile communication system terrestrial unlicensed spectrum (EUTRA_U) radio access, a trusted N3GA access (TRUSTED_N3GA), a trusted wireless local area network (TRUSTED_WLAN) access, a universal terrestrial radio access (UTRA), a global mobile system edge radio access network (GERA) access, a new radio low earth orbit (NR_LEO) access, a new radio medium/high earth orbit (NR_MEO) access, a new radio geostationary earth orbit (NR_GEO) access, or a new radio other satellite (NR_OTHER_SAT) access.

According to a fourth aspect of an embodiment of the present disclosure, an apparatus for determining a number of registered users is provided. The apparatus includes:
a determining module, configured to determine numbers of registered users for different access types based on access type information;
in which the access type information indicates an access type of a terminal accessing a network slice.

According to a fifth aspect of an embodiment of the present disclosure, an apparatus for determining a number of registered users is provided. The apparatus includes:
a sending module, configured to send a request message for updating a number of users of a slice to a first network device; and
a receiving module, configured to receive a response message sent by the first network device, in which the response message carries information about that numbers of registered users for different access types of the slice reach a predetermined threshold and/or numbers of registered users for different access types.

According to a sixth aspect of an embodiment of the present disclosure, an apparatus for determining a number of registered users is provided. The apparatus includes:
a sending module, configured to send a slice event subscription request indicating an access type to a first network device; in which, the slice event subscription request is used to obtain an event report of the access type, and the event report indicates a number of registered users associated with the access type indicated by the slice event subscription request; and
a receiving module, configured to receive the event report sent by the first network device for the slice event subscription request.

According to a seventh aspect of an embodiment of the present disclosure, a communication device is provided. The communication device includes:
a processor; and
a memory having instructions executable by the processor stored thereon.

The processor is configured to perform the method according to any embodiment of the disclosure when executing the executable instructions.

According to an eighth aspect of an embodiment of the present disclosure, a computer-readable storage medium having a computer-executable program stored thereon. When the computer-executable program is executed by a processor, the method according to any embodiment of the disclosure is performed.

In embodiments of the disclosure, based on the access type information, the numbers of registered users for different access types are determined, the access type information indicates the access type of the terminal accessing the network slice. The number of registered user is determined based on the access type of the terminal accessing the network slice, thus the numbers of registered users for different access types can be determined. Compared to only determining a total number of registered users for all access types, determining the numbers of registered users corresponding to different access types by taking a single access type as a unit can more accurately determine the number of registered users corresponding to a single access type. Therefore, based on the number of registered users corresponding to a single access type, resources can be configured, and related services can be triggered and executed, better meeting the needs of users.

### BRIEF DESCRIPTION OF THE DRAWINGS

FIG. 1 is a schematic diagram of a wireless communication system according to an exemplary embodiment.
FIG. 2 is a flowchart of a method for determining a number of registered users according to an exemplary embodiment.
FIG. 3 is a flowchart of a method for determining a number of registered users according to an exemplary embodiment.
FIG. 4 is a flowchart of a method for determining a number of registered users according to an exemplary embodiment.
FIG. 5 is a flowchart of a method for determining a number of registered users according to an exemplary embodiment.
FIG. 6 is a flowchart of a method for determining a number of registered users according to an exemplary embodiment.
FIG. 7 is a flowchart of a method for determining a number of registered users according to an exemplary embodiment.
FIG. 8 is a flowchart of a method for determining a number of registered users according to an exemplary embodiment.
FIG. 9 is a flowchart of a method for determining a number of registered users according to an exemplary embodiment.
FIG. 10 is a flowchart of a method for determining a number of registered users according to an exemplary embodiment.
FIG. 11 is a flowchart of a method for determining a number of registered users according to an exemplary embodiment.
FIG. 12 is a flowchart of a method for determining a number of registered users according to an exemplary embodiment.
FIG. 13 is a flowchart of a method for determining a number of registered users according to an exemplary embodiment.
FIG. 14 is a flowchart of a method for determining a number of registered users according to an exemplary embodiment.
FIG. 15 is a block diagram of an apparatus for determining a number of registered users according to an exemplary embodiment.
FIG. 16 is a block diagram of an apparatus for determining a number of registered users according to an exemplary embodiment.
FIG. 17 is a block diagram of an apparatus for determining a number of registered users according to an exemplary embodiment.
FIG. 18 is a block diagram of a terminal according to an exemplary embodiment.
FIG. 19 is a block diagram of a base station according to an exemplary embodiment.

### DETAILED DESCRIPTION

The example embodiments will be described in detail here, and examples thereof are shown in the accompanying drawings. When the following descriptions are referred to the accompanying drawings, unless otherwise indicated, the same numbers in different drawings represent the same or similar elements. The implementations described in the following example embodiments do not represent all implementations consistent with embodiments of the disclosure. Rather, they are merely examples of apparatuses and methods consistent with some aspects of embodiments of the disclosure as detailed in the appended claims.

The terms used in embodiments of the disclosure are only for the purpose of describing specific embodiments and are not intended to limit the embodiments of the disclosure. The singular forms "a" and "the" used in embodiments of the disclosure and the appended claim are also intended to include plural forms, unless the context clearly indicates otherwise. It should also be understood that the term "and/or" used in the disclosure means and includes any or all possible combinations of one or more associated listed items.

It should be understood that, although the terms first, second, third, etc. may be used in embodiments of the disclosure to describe various information, such information shall not be limited to these terms. These terms are only used to distinguish the same type of information. For example, without departing from the scope of the disclosure, first information may also be referred to as second information, and similarly, and the second information may also be referred to as the first information. Depending on the context, for example, the word "if' as used herein may be interpreted as "while" or "when" or "in response to determining".

For simplicity and ease of understanding, the terms used herein to represent size relationships are "greater than" or "less than". But for those skilled in the art, it can be understood that the term "greater than" also encompasses the meaning of "greater than or equal to", and "less than" also encompasses the meaning of "less than or equal to".

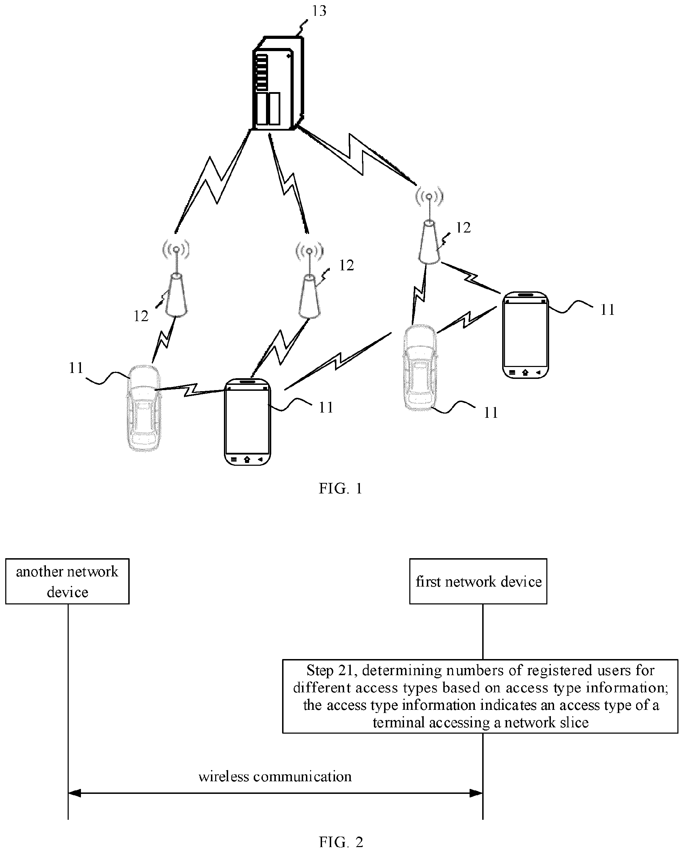

FIG. 1 is a schematic diagram of a wireless communication system provided by an embodiment of the disclosure. As illustrated in FIG. 1, the wireless communication system is a communication system based on mobile communication technology. The wireless communication system may include: a plurality of user equipment 110 and a plurality of base stations 120.

The user equipment 110 may be a device that provides voice and/or data connectivity to a user. The user equipment 110 may communicate with one or more core networks via a Radio Access Network (RAN). The user equipment 110 may be an Internet of Things (IoT) user equipment, such as a sensor device, a mobile phone, and a computer with an IoT user equipment. For example, the user equipment 110 may be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, a user agent, a user device, or a user equipment. Or, the user equipment 110 may be an unmanned aerial vehicle device. Or, the user equipment 110 may be an in-vehicle device, for example, an electronic control unit (ECU) having a wireless communication function, or a wireless communication device external to the ECU. Or, the user equipment 110 can also be a roadside device, for example, a street light, a signal light, or other roadside devices having the wireless communication function.

The base station 120 may be a network side device in the wireless communication system. The wireless communication system may be a 5th Generation (5G) system, also known as a New Radio (NR) system or a 5G NR system. Or, the wireless communication system may be any next generation system of the 5G system. An access network in the 5G system may be called a New Generation-RAN (NG-RAN).

The base station 120 can be an evolved base station (eNB) employed in a 4G system. Or, the base station 120 may be a base station (gNB) with a centralized distributed architecture employed in a 5G system. When the base station 120 adopts the centralized distributed architecture, it usually includes a Central Unit (CU) and at least two Distributed Units (DUs). The CU is equipped with protocol stacks of a Packet Data Convergence Protocol (PDCP) layer, a Radio Link Control (RLC) layer, or a Media Access Control (MAC) layer. The DU is equipped with a protocol stack of a physical (PHY) layer, and the specific implementation of the base station 120 is not limited in embodiments of the disclosure.

A wireless connection can be established between the base station 120 and the user equipment 110 via a radio interface. The radio interface is a radio interface based on the 5G standard, such as a NR. Or, the radio interface may also be a radio interface based on the standard of a next generation of 5G.

In some embodiments, an End to End (E2E) connection can also be established between the user equipments 110 in scenarios, such as, Vehicle to Vehicle (V2V) communication, Vehicle to Infrastructure (V2I) communication, and Vehicle to Pedestrian (V2P) communication in Vehicle to Everything (V2X) communication.

The user equipment above may be a terminal in following embodiments.

In some embodiments, the above wireless communication system may also include a network management device 130.

The plurality of base stations 120 are connected to the network management device 130 respectively. The network management device 130 may be a core network device in the wireless communication system, for example, a core network device in the wireless communication system, such as an Access and Mobility Management Function (AMF), a Session Management Function (SMF), a User Plane function (UPF), a Policy Control Function (PCF), a Network Repository Function (NRF), etc. The present disclosure does not limit the implementation form of the network management device 130.

In order to facilitate understanding of those skilled in the art, multiple implementation methods are listed in embodiments of the disclosure to clearly illustrate the technical solution of embodiments of the disclosure. Those skilled in the art can understand that the multiple embodiments provided in embodiments of the disclosure can be executed separately, or in combination with a method of other embodiments of the disclosure, or may be executed separately or in combination with some methods in the related art, which is not limited in embodiments of the disclosure.

In order to better understand the technical solution described in any embodiment of the disclosure, firstly, application scenarios of network slicing in the related art are described.

In an embodiment, multiple network slices deployed by mobile network operators can provide identical functions. However, for different terminal groups, as different commitment services are provided, such network slices may have the same slice but different single network slice selection assistance information (S-NSSAI) or have the same service type but different slice sharding identifiers.

In an embodiment, the selection of a set of network slice instances for a terminal is typically triggered through interaction with a Network Slice Selection Function (NSSF), triggered by an Access and Mobility Management Function (AMF) firstly contacted in the registration procedure, and may result in a change to an AMF. For each Public Land Mobile Network (PLMN), a Protocol Data Unit (PDU) session belongs to one and only one specific network slice instance. Different network slice instances may have PDU sessions for specific slices using the same data network name (DNN), however different network slice instances do not share a PDU session. During a switching procedure, a source AMF interacts with a Network Repository Function (NRF) to select a target AMF.

In an embodiment, a Network Slice Type (NEST) is applied to network slicing. The network slicing is supported by multiple instances of network slices. A General Network Slice Template (GST) defines an attribute supported by a network slice.

In an embodiment, a network slice admission control function (NSACF) is used to monitor a number of registered terminals and a number of PDU sessions for a network slice that supports a NSAC function. The NSACF is also configured with access type information of the S-NSSAI for performing the NSAC function.

In an embodiment, each NSACF is configured with a maximum number of terminals allowed to access and the maximum number of PDU sessions allowed to be activated for a network slice. The NSACF supports monitoring and admission control of the maximum number of terminals and the maximum number of PDU sessions within a PLMN. If a number of terminals registered to a current slice exceeds a certain threshold (such as the maximum number of terminals for the slice), the NSAC may reject terminal registration to control that the number of terminals in the service does not exceed the maximum number of terminals for the slice configured by the network. When the number of PDU sessions activated within the slice exceeds a certain threshold (for example, the maximum number of activated sessions), the NSAC may reject the activation of PDU sessions to control that the current number of sessions does not exceed the maximum number of sessions configured by the network.

In an embodiment, multiple NSACFs may be deployed in an operator network. One NSACF may provide slicing service for one or more S-NSSAI in one service area. Within one service area, one S-NSSAI is processed by only one NSACF, which can be an NSACF instance or a NSACF set. One PLMN may have one or more service areas.

In an embodiment, an Application Function (AF) has a need to obtain status information of a network slice based on user experience assurance or enhancement needs, such as a current number of registered users in a slice, a current number of activated PDU sessions, a proportion of the current number of registered users and/or the number of activated PDU sessions in a slice to an overall threshold of the slice.

In related art, different access modes have different charging modes and rates. Therefore, the proportions of the number of users for different access methods have an increasingly significant impact on actual network slice status information. For example, there is a significant difference in the numbers of users for different access methods for different time points or service types. However, the network infrastructure and resource allocation are relatively stable, thus operation and service needs, such as how an operator or an application provider can further obtain detailed information such as the number of registered users and real-time network conditions for slicing, to achieve resource elastic configuration and better service experience, as well as open execution and optimization of related network capabilities cannot be met by the current functional characteristics of network slicing.

Therefore, how to further obtain detailed network status information and real-time network conditions related to parameters such as the number of registered users of a slice, to further achieve resource elastic configuration and better service experience, as well as achieve open execution and optimization of related network capabilities, remains an unresolved problem in wireless networks.

FIG. 2 is a flowchart of a method for determining a number of registered users according to an embodiment of the disclosure. The method is performed by a first network device. The method includes following steps.

Step 21, numbers of registered users for different access types are determined based on access type information.

The access type information indicates an access type of a terminal accessing a network slice.

The terminal involved in the present disclosure may include but is not limited to a mobile phone, a wearable device, an in-vehicle terminal, and a roadside unit (RSU), a smart home terminal, an industrial sensing device, and/or a medical device, etc. In this disclosure, the number of registered users can also have the meaning of "a number of registered terminals". In this disclosure, the slice can also have the meaning of "a network slice or a network slice instance".

The first network device involved in this disclosure may be a NSACF. It should be noted that the first network device in this disclosure is not limited to the NSACF, and can also be another communication node in a core network, which is not limited herein. One NSACF may be deployed for each network slice, or multiple NSACFs may be deployed for each network slice. If multiple NSACFs are deployed for each network slice, the NSACF involved in this disclosure is a certain NSACF of the multiple NSACFs. Similarly, for example, a second network device in this disclosure may be an AMF, but the second network device in this disclosure is not limited to the AMF and can also be another communication node in the core network. A third network device in this disclosure may be an AF.

It should be noted that, determining the numbers of registered users for different access types based on access type information in this disclosure may include: counting the numbers of registered users for different access types.

The access type information indicates at least one of:
an access type;
a radio access type (RAT); or
access type assistance information (addAccessinfo).

It should be understood that the access type indication information may include at least one of the access type, the radio access type, and the access type assistance information. The access type assistance information includes the access type and the radio access type.

In an embodiment, the access type includes at least one of: a third generation mobile communication partner project (3GPP) access; a non-3GPP access; or a 3GPP and a non-3GPP access.

In an embodiment, the radio access type includes at least one of: an NR access, an evolved universal mobile communication system terrestrial radio access (EUTRA), a wireless local area network access (WLAN) access, a virtual network (VIRTUAL) access, a narrowband Internet of Things (NBIOT) access, a wired network (WIRELINE) access, a wired cable network (WIRELINE-CABLE) access, a wired broadband network (WIRELINE-BBF) access, an urban rail transit vehicle-terrestrial integrated communication system (LTE-M) access, a new radio unlicensed spectrum (NR_U) access, an evolved universal mobile communication system terrestrial unlicensed spectrum (EUTRA_U) radio access, a trusted N3GA access (TRUSTED_N3GA), a trusted wireless local area network (TRUSTED_WLAN) access, a universal terrestrial radio access (UTRA), a global mobile system edge radio access network (GERA) access, a new radio low earth orbit (NR_LEO) access, a new radio medium/high earth orbit (NR_MEO) access, a new radio geostationary earth orbit (NR_GEO) access, or a new radio other satellite (NR_OTHER_SAT) access.

In an embodiment, the access type information may be configured on the NSACF, or the access type information may be obtained from a consumer network function, or the access type information may be obtained from an operation administration and maintenance (OAM) system. It should be noted that the consumer network function may include one of: a Network Open Function (NEF), a Policy Control Function (PCF), a main NSACF in a scenario of deploying multiple NSACFs, and an OAM system.

It should be noted that the numbers of registered users for different access types may be the numbers of registered users for multiple access types or a number of registered users for a single access type.

In an embodiment, the numbers of registered users for different access types are determined based on access type information in a registration procedure of a terminal. The access type information indicates an access type of the terminal accessing a network slice. In this way, the numbers of registered users for different access types can be counted.

In an embodiment, the numbers of registered users for different access types are determined based on access type information in a configuration update procedure of the terminal. The access type information indicates an access type of a terminal accessing a network slice. In this way, the numbers of registered users for different access types can be counted.

In an embodiment, the numbers of registered users for different access types are determined based on access type information in a deregistration procedure of the terminal. The access type information indicates an access type of a terminal accessing a network slice. In this way, the numbers of registered users for different access types can be counted.

In some embodiments, the access type here may be a current access type of the terminal accessing the network slice. Or, the access type may be an access type for the network slice to perform NSAC counting.

In an embodiment, a number of registered users for each access type of the network slice is determined based on the access type of the terminal accessing the network slice. In this way, the numbers of registered users for different access types can be counted.

In an embodiment, before determining the numbers of registered users for different access types, the numbers of registered users for different access types can be updated. In this way, updating can be performed in a timely manner.

In an embodiment, in the registration procedure of the terminal, based on whether an early admission control (EAC) mode is enabled, the numbers of registered users for different access types are updated before or after transmitting a registration acceptance message. The registration procedure includes a registration procedure for a mobile registration update type caused by an initial registration or a cross-AMF switching.

For example, in an EAC activated state, the numbers of registered users for different access types are updated before transmitting the registration acceptance message. Or, in an EAC inactive state, the numbers of registered users for different access types are updated after transmitting the registration acceptance message.

In an embodiment, in the deregistration procedure of the terminal, the numbers of registered users for different access types are updated after the deregistration procedure is completed.

In an embodiment, in the configuration update procedure of the terminal, if a Network Slice-Specific Authentication and Authorization (NSSAA) procedure or a signing S-NSSAI change procedure triggers a configuration update, an update of the numbers of registered users for different access types is performed before the configuration of an update message according to the EAC mode. For example, if the EAC mode is activated and an update flag indicates an increase in the number, the update of the numbers of registered users for different access types is performed before the terminal configures the update message. Or, if the EAC mode is activated and an update identifier indicates a decrease in the number, the update of the numbers of registered users for different access types is performed after the terminal configures the update message. Or, if EAC mode is not activated, the update of the numbers of registered users for different access types is performed after the terminal configures the update message.

It should be noted that updating a number of registered users may increase or decrease the number of registered users.

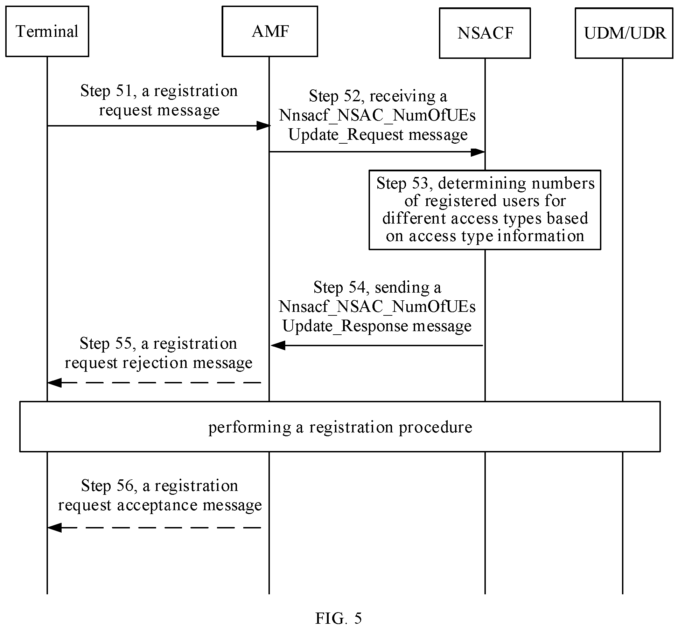

In an embodiment, as shown in FIG. 5, in step 52, a NSACF may receive a request message (e.g, the Nnsacf_NSAC_NumOfUEsUpdate_Request) sent by an AMF. The request message includes an update identifier. The update identifier indicates an increase or a decrease in the number of registered users. For example, when a user registers to a slice, the update identifier indicates an increase in the number of registered users. O, when the user deregisters from the slice or the registration cannot continue, the update identifier indicates a decrease in the number of registered users.

It should be noted that the request message can also indicate a terminal identifier, an access type, a related slice S-NSSAI for requesting execution of the NSAC, and/or an AMF identifier, etc. The access type information may be generated locally by the AMF or obtained from a request message sent from a base station to the AMF.

In an embodiment, for a slice, when the AMF and the NSACF interact with each other for the first time to perform updating, the AMF may carry, in the request message, network function (NF) information of a relevant node to which the EAC may be notified. In this way, the EAC related notifications of the slice are implicitly subscribed to from NSACF.

In an embodiment, the NSACF is also configured with a maximum number of registered users allowed by a slice based on the access type. When updating the number of registered users based on the access type for a slice, if the slice reaches the maximum number of registered users within one or more access types, the NSACF carries, in a response message returned to the AMF, information about that the number of registered users reaches the maximum number of users. It should be noted that, if EAC notification endpoint information is received from the AMF, the NSACF stores the EAC notification endpoint information associated with the S-NSSAI, for subsequently updating an EAC mode using the stored notification endpoints.

In an embodiment, referring to FIG. 5 again, in step 54, the NSACF sends a response message (e.g, Nnsacf_NSAC_NumOfUEsUpdate_Response) to AMF for the request message. The response message carries a slice identifier S-NSSAI (s) of a slice for accessing which the number of registered users of the access type of the terminal reaches a set threshold or a maximum value, and a relevant result parameter indicating that the maximum value is reached.

In an embodiment, during a registration procedure of the terminal, if only partial slices of requested slices reach the maximum number of registered users after the AMF receives the response message, the AMF may send a registration acceptance message to the registered terminal. In the registration acceptance message, a slice identifier that is rejected due to an update is carried in a reject slice list, and a corresponding rejection reason is defined as the maximum number of users within the area for the slice has been reached. In an embodiment, a timer that is able to initiate a re-request can be set.

In an embodiment, if all requested slice S-NSSAI(s) in the request message sent by the AMF to the NSACF reach an allowable maximum value, and if one or more signed slices in signing information are marked as default slices and no update is required, the AMF may determine to place these default slices in to Allow NSSAI as authentication allowed slices. Otherwise, the AMF may reject the registration request (such as a registration request for the access type) of the user UE. In the registration rejection message, the AMF carries a list of rejection slice identifiers, with each slice accompanied by a corresponding rejection reason value, such as the allowable maximum number of registered users in the area of the slice is reached. In an embodiment, a timer that is able to initiate a re-request can be set.

In embodiments of the disclosure, based on the access type information, the numbers of registered users for different access types are determined, the access type information indicates the access type of the terminal accessing the network slice. The number of registered users is determined based on the access type of the terminal accessing the network slice, thus the numbers of registered users for different access types can be determined. Compared to only determining a total number of registered users for all access types, determining the numbers of registered users corresponding to different access types by taking a single access type as a unit can more accurately determine the number of registered users corresponding to a single access type. Therefore, based on the number of registered users corresponding to a single access type, resources can be configured, and related services can be triggered and executed, better meeting the needs of users.

It should be noted that, those skilled in the art can understand that the methods provided in embodiments of the disclosure can be performed separately or together with some methods in embodiments of the disclosure or in the related art.

In an embodiment, the access type includes at least one of:
a third generation mobile communication partner project (3GPP) access;
a non-3GPP access; or
a 3GPP and a non-3GPP access.

In an embodiment, the radio access type includes at least one of: a new radio (NR) access, an evolved universal mobile communication system terrestrial radio access (EUTRA), a wireless local area network access (WLAN) access, a virtual network (VIRTUAL) access, a narrowband Internet of Things (NBIOT) access, a wired network (WIRELINE) access, a wired cable network (WIRELINE-CABLE) access, a wired broadband network (WIRELINE-BBF) access, an urban rail transit vehicle-terrestrial integrated communication system (LTE-M) access, a new radio unlicensed spectrum (NR_U) access, an evolved universal mobile communication system terrestrial unlicensed spectrum (EUTRA_U) radio access, a trusted N3GA access (TRUSTED_N3GA), a trusted wireless local area network (TRUSTED_WLAN) access, a universal terrestrial radio access (UTRA), a global mobile system edge radio access network (GERA) access, a new radio low earth orbit (NR_LEO) access, a new radio medium/high earth orbit (NR_MEO) access, a new radio geostationary earth orbit (NR_GEO) access, or a new radio other satellite (NR_OTHER_SAT) access.

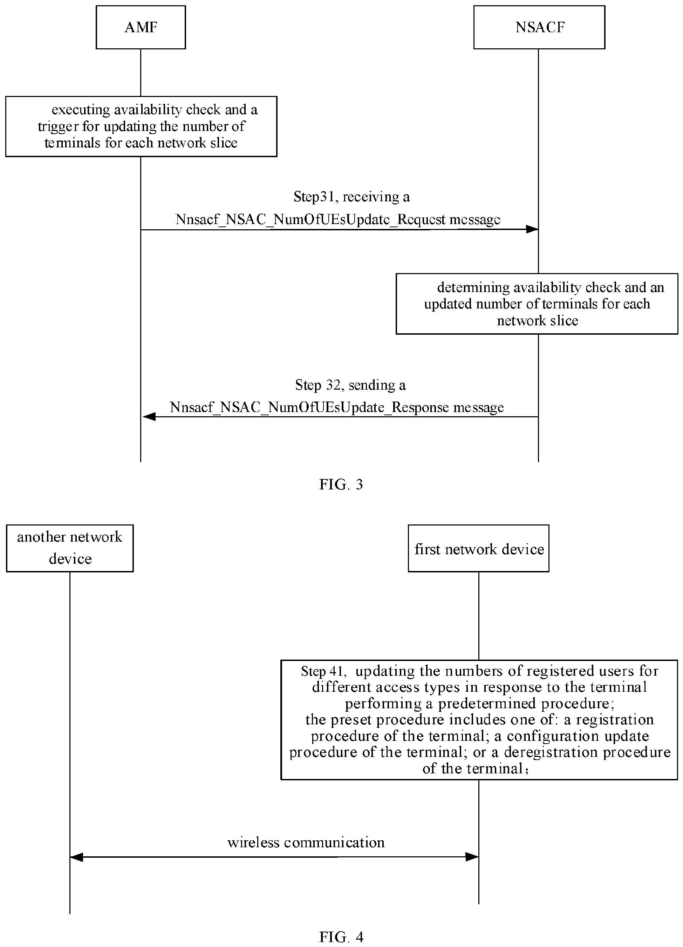

FIG. 4 is a flowchart of a method for determining a number of registered users according to an exemplary embodiment. The method is performed by a first network device. The method includes following steps.

Step 41, the numbers of registered users for different access types are updated in response to the terminal performing a predetermined procedure.

The preset procedure includes one of:
a registration procedure of the terminal;
a configuration update procedure of the terminal; or
a deregistration procedure of the terminal.

In an embodiment, in the registration procedure of the terminal, based on whether an early admission control (EAC) mode is enabled, the numbers of registered users for different access types are updated before or after transmitting a registration acceptance message. The registration procedure includes a registration procedure for a mobile registration update type caused by an initial registration or a cross-AMF switching.

For example, in an EAC activated state, the numbers of registered users for different access types are updated before transmitting the registration acceptance message. Or, in an EAC inactive state, the numbers of registered users for different access types are updated after transmitting the registration acceptance message.

In an embodiment, in the deregistration procedure of the terminal, the numbers of registered users for different access types are updated after the deregistration procedure is completed.

In an embodiment, in the configuration update procedure of the terminal, if a Network Slice-Specific Authentication and Authorization (NSSAA) procedure or a signing S-NSSAI change procedure triggers a configuration update, an update of the numbers of registered users for different access types is performed before the configuration of an update message according to the EAC mode. For example, if the EAC mode is activated and an update flag indicates an increase in the number, the update of the numbers of registered users for different access types is performed before the terminal configures the update message. Or, if the EAC mode is activated and an update identifier indicates a decrease in the number, the update of the numbers of registered users for different access types is performed after the terminal configures the update message. Or, if EAC mode is not activated, the update of the numbers of registered users for different access types is performed after the terminal configures the update message.

It should be noted that updating a number of registered users may increase or decrease the number of registered users for a corresponding access type or a radio access type.

For example, as shown in FIG. 5, the registration procedure includes following stops.

Step 51, during the registration procedure, the terminal initiates a registration procedure to one or some network slices to a network. This can be that the terminal sends a registration request message to an AMF. The registration request message may carry parameters such as a slice identifier and an NSACF characteristic. The AMF performs discovery and selection of NSACF based on parameters such as the slice identifier and the NSACF characteristic. Validity check and an update procedure of a registered UE for the network slice based on an access type is triggered. The validity check and the update procedure includes determining the numbers of registered users for different access types based on the access type information.

Step 52, the AMF sends a Nnsacf-NSAC-NumOfUEsUpdate-Request to the NSACF.

Step 53, the NSACF determines the numbers of registered users for different access types based on the access type information. This may include checking and updating the numbers of registered users for different access types.

Step 54, the NSACF sends a Nnsacf-NSAC-NumOfUEsUpdate-Response to the AMF. The Nnsacf-NSAC-NumOfUEsUpdate-Response includes the numbers of registered users for different access types determined by the NSACF.

Step 55, the AMF sends a registration request rejection message to the terminal. For example, if all slices that request to execute NSAC reach their maximum value (within the slice based on the access type, and other NSACFs has no new threshold to update or supplement for the corresponding access type within the slice), and it is determined, based on an AMF configuration and other policy information, such as no other authorized default slice, that there is no slice performing the NSSAA slice specific authentication procedure, the AMF may reject the UE from registering with the relevant network slice through the access type, send a registration rejection message carrying a relevant rejection reason value, such as reaching a threshold, etc. Otherwise, step 56 is executed.

Step 56, the AMF sends a registration request acceptance message to the terminal.

For example, as shown in FIG. 5, the deregistration procedure includes following stops.

Step 61, the terminal has been registered, and the terminal or a network triggers a deregistration procedure.

Step 62, the terminal sends a deregistration request to the AMF.

Step 63, the deregistration procedure is performed and completed.

Step 64, the AMF sends a deregistration acceptance message to the terminal. It should be noted that steps 62 to 64 complete the deregistration procedure based on a conventional deregistration procedure. The AMF triggers a validity check and an update procedure of the number of registered users for a slice based on the access type.

Step 65, the AMF sends a Nnsacf-NSAC-NumOfUEsUpdate-Request to a NSACF.

Step 66, the NSACF determines the numbers of registered users for different access types based on access type information. This may be to check and update the numbers of registered users for different access types.

Step 67, the NSACF sends a Nnsacf-NSAC-NumOfUEsUpdate-Response to the AMF. The Nnsacf-NSAC-NumOfUEsUpdate-Response includes the numbers of registered users for different access types determined by NSACF.

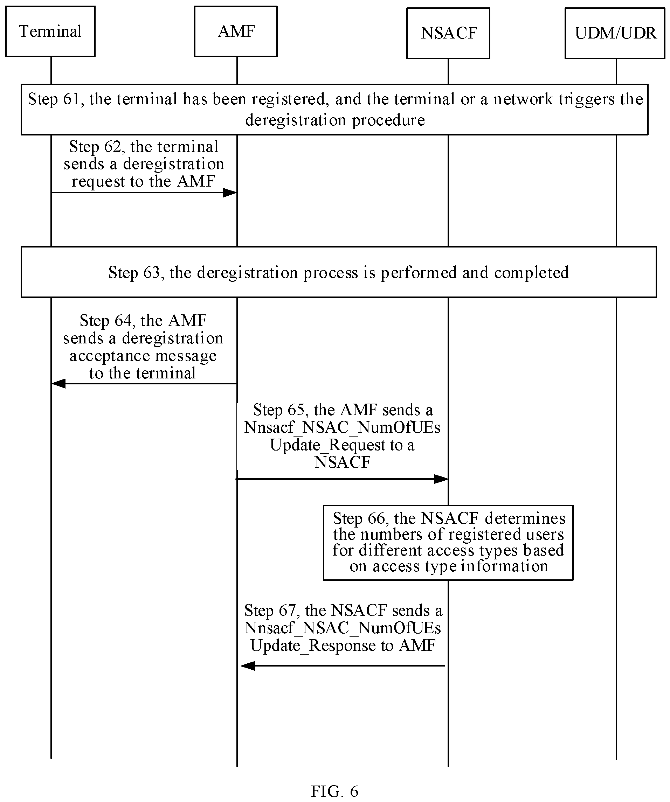

In an embodiment, as illustrated in step 52 in FIG. 5 and step 65 in FIG. 6, when performing the predetermined procedure, the NSACF may receive a request message sent by the AMF (e.g, the Nnsacf_NSAC_NumOfUEsUpdate_Request). The request message includes an updating identifier. The updating identifier indicates an increase or a decrease in the number of registered users.

It should be noted that those skilled in the art can understand that the method provided in embodiments of the disclosure can be performed separately or together with some methods in embodiments of the disclosure or in the related art.

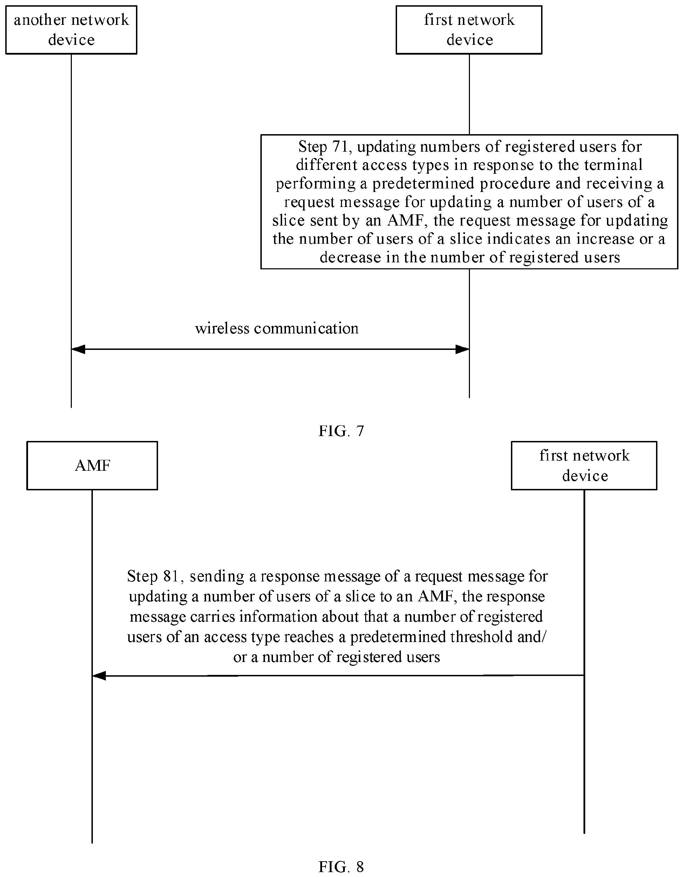

As shown in FIG. 7, a method for determining a number of registered users is provided in embodiments of the disclosure. The method is performed by a first network device, and includes following steps.

Step 71, numbers of registered users for different access types are updated in response to the terminal performing a predetermined procedure and receiving a request message for updating a number of users of a slice sent by an AMF. The request message for updating the number of users of a slice indicates an increase or a decrease in the number of registered users.

In an embodiment, in response to the terminal performing the predetermined procedure and the request message for updating a number of users of a slice indicating an increase in the number of registered users, the numbers of registered users for different access types are increased.

In an embodiment, in response to the terminal performing the predetermined procedure and the request message for updating a number of users of a slice indicating a decrease in the number of registered users, the numbers of registered users for different access types are reduced.

It should be noted that those skilled in the art can understand that the method provided in embodiments of the disclosure can be performed separately or together with some methods in embodiments of the disclosure or in the related art.

As shown in FIG. 8, a method for determining a number of registered users is provided in embodiments of the disclosure. The method is performed by a first network device, and includes following steps.

Step 81, a response message of a request message for updating a number of users of a slice is sent to a second network device.

The response message carries information about that a number of registered users of an access type reaches a predetermined threshold and/or a number of registered users associated with an access type.

In an embodiment, the first network device receives the request message for updating a number of users of a slice sent by an AMF. In response to the terminal performing a predetermined procedure and the request message for updating a number of users of a slice indicating an increase in the number of registered users, the numbers of registered users for different access types are increased. A response message carrying the increased numbers of registered users for different access types is sent to the AMF. Referring to step 54 in FIG. 5 and step 67 in FIG. 6, a response message Nnsacf-NSAC-NumOfUEsUpdate-Response may be sent. It should be noted that if the increased numbers of registered users for different access types reaches a predetermined threshold, the response message also carries the information about that the number of registered users of an access type reaches the predetermined threshold.

In an embodiment, in response to the terminal performing the predetermined procedure and the number of users, the request message for updating a number of users of a slice indicating a decrease in the number of registered users, the numbers of registered users for different access types are reduced.

It should be noted that those skilled in the art can understand that the method provided in embodiments of the disclosure can be performed separately or together with some methods in embodiments of the disclosure or in the related art.

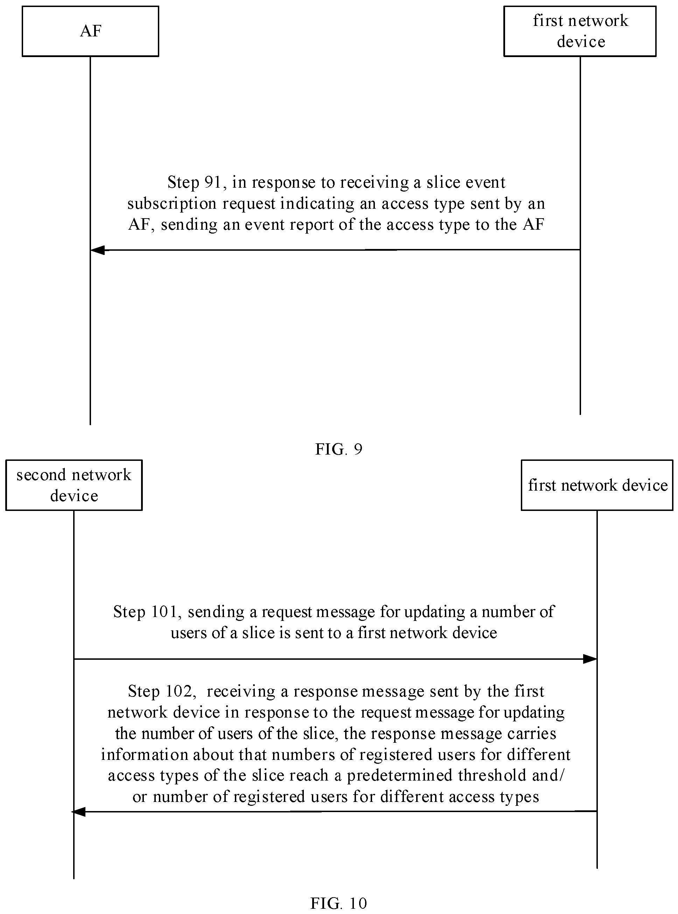

As shown in FIG. 9, a method for determining a number of registered users is provided in embodiments of the disclosure. The method is performed by a first network device, and includes following steps.

Step 91, in response to receiving a slice event subscription request indicating an access type sent by an application function AF, an event report of the access type is sent to the AF.

In an embodiment, the slice event subscription request from the AF is received. The slice event subscription request carries access type information. The event report of an access type indicated by the access type information is sent to the AF.

In an embodiment, the slice event subscription request of the AF is received through the NEF, and the event report is sent to the AF through the NEF.

In an embodiment, when receiving the slice event subscription request from the AF through the NEF and sending the event report to the AF through the NEF, if the access type indicated by the access type information is associated with multiple NSACFs, the NEF may send the slice event subscription request to the multiple NSACFs. After receiving the event information, the NEF may perform aggregation statistics and report the aggregated information to AF.

In an embodiment, the NEF performs the discovery and selection of the NSASF s through a network registration function (NRF), or the NEF performs the discovery and selection of the NSACFs through a local configuration.

In an embodiment, the NEF performs a mapping between application or service identifiers of the AF and slice identifiers. When the NEF receives the slice event subscription request from the AF, it maps the application or service identifier to the slice identifier and sends it to the NSACF. When receiving a time report from the NSACF, the NEF maps the slice identifier to an application or service identifier and send it to the AF. For example, in the response message, the slice identifier is mapped to an application or service identifier and sent to the AF.

In an embodiment, the slice event subscription request includes an event requested to be subscribed to, and the event includes at least one of: a number of registered terminals and a ratio of the number of registered terminals to an allowable maximum number of registered terminals.

In an embodiment, the slice event subscription request includes screening information of an event requested to be subscribed to. The screening information indicates a feature that needs to be reported. For example, the screening information indicates access type information. The access type information includes at least one of: an access type or a radio access type. The screening information may also indicate at least one of: a slice identifier, a combination of a slice identifier and a data network name.

In an embodiment, the slice event subscription request may also include a report mode of an event requested to be subscribed to. The reporting mode includes at least one of: a threshold for triggering reporting, and a periodic time interval for triggering reporting. An event report is reported when the threshold is reached or when the periodic time interval is reached.

In an embodiment, the slice event subscription request includes an immediate report flag indicates to report a requested event report immediately upon receipt of the request.

In an embodiment, in order to subscribe to from the NEF or cancel a reporting notification of a related number of terminals for a network slice type, the AF sends a Nnef_EventExposure subscribe/unsubscribe Request message to the NEF, and the message includes an event ID, an event filter, and event report information.

In an embodiment, the event ID parameter defines a subscribed event ID, i.e., a number of registered terminals, or a ratio of the number of registered terminals to the allowable maximum number of registered terminals, or both the number of registered terminals and the ratio of the number of registered terminals to the allowable maximum number of registered terminals.

In an embodiment, the event filter parameter defines a range in which reporting is required. Each range corresponds to an access type. The access type information includes at least one of: an access type, a radio access type, and access assistance information including an access type and a radio access type. In an embodiment, the event filter parameter further includes one of the following items: a slice identifier S-NSSAI, a combination of a slice identifier S-NSSAI and a data network name (DNN).

In an embodiment, the event report information parameter defines a reporting mode, and includes a threshold, or a periodic reporting including a periodic time interval. If the report information parameter is a threshold that triggers reporting, an event report is reported when the threshold is reached. If the report information parameter is a periodic time interval for triggering reporting, an event report is reported when the periodic time interval arrives. The subscribe requests may also include an immediate report flag indicating that the requested event report is reported immediately upon receipt of the request.

In an embodiment, when multiple NSACFs are deployed in a requested slice, the NEF performs aggregate statistics on reported messages after receiving information reported by the corresponding NSACFs, and reports the aggregated information to the requesting application function AF. In an embodiment, when there are multiple NSACFs, one of the NSACFs can be selected as a master NSACF or a proxy NSACF of corresponding NSACFs according to an operation policy or a NEF configuration, to perform subscription, collection and aggregation of related NSACF status information. When a NSACF is the master NSACF, other NSACFs in the slice are slave NSACFs. When a NSACF is a proxy NSACF, the NSACF does not have a master-slave relationship with other NSACFs in the slice.

In an embodiment, the NEF sends a response message Nnef_EventExposure_Subscribe/usubsubscribe Response to the AF. After receiving a slice event subscription request from the application function AF, the NEF subscribes to an event report of the requested slice from each NSACF of the requested slice, and sends the event report to the AF after receiving the event report of each NSACF. It should be noted that the NEF may query the NSACF(s) corresponding to slice request access type information through the NRF, or discover and select the NSACF(s) corresponding to the slice request access type information through a local configuration.

In an embodiment, if the NEF does not subscribed to the reporting event of the related Requested S-NSSAI from the NSACF(s) corresponding to the slice request access type information, the NEF initiates a subscription request to the NSACF corresponding to the slice request access type information supporting the Requested S-NSSAI, and sends a request message Nnef_SliceEventExposure_Subscribe/Unsubscribe request. The message includes an event ID, an event filter, event report information, etc. The NEF stores event report information requested by the AF. If UE slice admission control is performed by multiple NSACFs for the Requested S-NSSAI, the NEF can set the time report information as a periodic reporting in the subscribe request to each NSACF. If the UE slice admission control is performed by a single NSACF for the Requested S-NSSAI, the event report information set by the NEF itself is the same as the request received from the AF. The NEF may also set the event ID and the event filter information according to the content in the request message received from the AF.

In an embodiment, the NSACF sends a Nnsacf_SliceEventExposure_Subscribe/usubsubscribe response message to the NEF to confirm the subscribe request.

In an embodiment, when a report condition of subscription is met and the report event is triggered, the NSACF sends a trigger notification to the NEF to perform the reporting of the information related to the subscribed event.

In an embodiment, the NSACF sends a Nnsacf_SliceEvent Exposure_Notify message to the NEF, and the message carries parameters such as an event ID, an event filter, and event report information.

In an embodiment, when multiple NSACFs corresponding to the request access type information of the requested NSSAI perform the UE slice admission control, the NEF collects the reports of all NFACFs corresponding to the request access type, and performs number aggregation for a slice S-NSSAI in a request event filter (such as 3GPP/non-3GPP access type). When a report condition is met and the reporting is triggered, the NEF performs number reporting for the slice S-NSSAI in the requested event filter (such as 3GPP/non-3GPP access type).

When a single NSACF corresponding to the request access type information of the requested NSSAI performs the UE slice admission control, the NEF immediately returns a report notification to the AF, to report a usage report counted by the NEF, or performs a periodic reporting to the AF according to a periodic subscription.

In an embodiment, when a condition of the event report subscribed by the AF is triggered/satisfied, subscription reporting is triggered. The NEF sends a notification to the AF to report the subscribed related usage and information according to a subscription requirement, such as a number of UEs of the 3GPP access type of the slice, a number of UEs of the non-3GPP access type of the slice, or a number of UEs of a satellite access in the 3GPP access of the slice, etc., or to report a ratio of a corresponding number of UEs to an allowable maximum number at the same time, etc.

When the network does not exposure information such as a network slice identifier to the AF (such as an untrusted third-party AF), the NEF performs the mapping between the AF application or service identifiers and the slice identifiers. When the NEF receives the subscribe request from the AF, the NEF maps the application or service identifier to a slice identifier, and sends it to the NSACF. When the NEF receives a subscription event notification from the NSACF, the NEF maps the slice identifier to an identifier of an application or service, and sends it to the AF.

It should be noted that those skilled in the art can understand that the method provided in embodiments of the disclosure can be performed separately or together with some methods in embodiments of the disclosure or some methods in the related art.

As shown in FIG. 10, a method for determining a number of registered users is provided in embodiments of the disclosure. The method is performed by a second network device, and includes following steps.

Step 101, a request message for updating a number of users of a slice is sent to a first network device.

Step 102, a response message sent by the first network device in response to the request message for updating the number of users of the slice is received, the response message carries information about that numbers of registered users for different access types of the slice reach a predetermined threshold and/or number of registered users for different access types.

The terminal involved in the present disclosure may include but is not limited to a mobile phone, a wearable device, an in-vehicle terminal, and a roadside unit (RSU), a smart home terminal, an industrial sensing device, and/or a medical device, etc. In this disclosure, the number of registered users can also have the meaning of "a number of registered terminals". In this disclosure, the slice can also have the meaning of "a network slice or a network slice instance".

The first network device involved in this disclosure may be a NSACF. It should be noted that the first network device in this disclosure is not limited to the NSACF, and can also be another communication node in a core network, which is not limited herein. One NSACF may be deployed for each network slice, or multiple NSACFs may be deployed for each network slice. If multiple NSACFs are deployed for each network slice, the NSACF involved in this disclosure is a certain NSACF of the multiple NSACFs. Similarly, for example, a second network device in this disclosure may be an AMF, but the second network device in this disclosure is not limited to the AMF and can also be another communication node in the core network.

It should be noted that the numbers of registered users for different access types may be determined or counted by the first network device.

The access type includes an access type (Access Type) and a radio access type (RAT). In an embodiment, the radio access type includes at least one of: an NR access, an EUTRA access, a WLAN access, a VIRTUAL access, a NBIOT access, a WIRELINE access, a WIRELINE-CABLE access, a WIRELINE-BBF access, an LTE-M access, a NR_U access, an EUTRA_U radio access, a TRUSTED_N3GA access, a TRUSTED_WLAN access, a UTRA access, a GERA access, a NR_LEO access, a NR_MEO access, a NR_GEO access, or a NR_OTHER_SAT access.

In an embodiment, in a registration procedure of the terminal, a request message for updating a number of users of a slice is sent to the first network device, and a response message sent by the first network device in response to the request message for updating the number of users of the slice is received. The response message carries information about that numbers of registered users for different access types of the slice reach a predetermined threshold and/or the number of registered users for different access types.

In an embodiment, in a configuration update procedure of the terminal, numbers of registered users for different access types are determined based on access type information. The access type information indicates an access type of the terminal accessing a network slice. In this way, the numbers of registered users for different access types can be counted.

In an embodiment, in a de-registration procedure of the terminal, numbers of registered users for different access types are determined based on access type information. The access type information indicates an access type of the terminal accessing a network slice. In this way, the numbers of registered users for different access types can be counted.

In an embodiment, referring to FIG. 5, in step 52, the AMF may send a request message (e.g., Nnsacf_NSAC_NumOfUEsUpdate_Request) to the NSACF. The request message includes an update identifier. The update identifier indicates an increase or a decrease in the number of registered users. For example, when a user registers to a slice, the update identifier indicates that the number of registered users increases. Or, when the user deregisters from the slice or the registration cannot continue, the update identifier indicates that the number of registered users decreases.

It should be noted that, the request message may also include a terminal identifier, an access type, a related slice S-NSSAI for requesting execution of the NSAC, and/or an AMF identifier etc. The access type information may be locally generated by the AMF, or obtained from a request message sent by a base station to the AMF.

In an embodiment, for a slice, when the AMF and the NSACF interact with each other for the first time to perform the updating, the AMF may carry, in the request message, NF information of a relevant node to which the EAC may be notified. In this way, the EAC related notifications of the slice are implicitly subscribed to from NSACF.

In an embodiment, the NSACF is also configured with a maximum number of registered users allowed by a slice based on the access type. When updating the number of registered users based on the access type for a slice, if the slice reaches the maximum number of registered users within one or more access types, the NSACF carries, in a response message returned to the AMF, information about that the number of registered users reaches the maximum number of users. It should be noted that, if EAC notification endpoint information is received from the AMF, the NSACF stores the EAC notification endpoint information associated with the S-NSSAI, for subsequently updating an EAC mode using the stored notification endpoints.

In an embodiment, referring to FIG. 5 again, in step 54, the AMF receives the response message (e.g., Nnsacf_NSAC_NumOfUEsUpdate_Response) sent by the NSACF in response to the request message. The response message carries a slice identifier S-NSSAI (s) of a slice of which the number of registered users for the access type reaches a set threshold or a maximum value, and a relevant result parameter indicating that the maximum value is reached.

In an embodiment, during a registration procedure of the terminal, if only partial slices of requested slices reach the maximum number of registered users after the AMF receives the response message, the AMF may send a registration acceptance message to the registered terminal. In the registration acceptance message, a slice identifier that is rejected due to an update is carried in a reject slice list, and a corresponding rejection reason is defined as the maximum number of users within the area for the slice has been reached. In an embodiment, a timer that is able to initiate a re-request can be set.

In an embodiment, if all requested slice S-NSSAI(s) in the request message sent by the AMF to the NSACF reach an allowable maximum value, and if one or more signed slices in signing information are marked as default slices and no update is required, the AMF may determine to place these default slices in to Allow NSSAI as authentication allowed slices. Otherwise, the AMF may reject the registration request (such as a registration request for the access type) of the user UE. In the registration rejection message, the AMF carries a list of rejection slice identifiers, with each slice accompanied by a corresponding rejection reason value, such as the allowable maximum number of registered users in the area of the slice is reached. In an embodiment, a timer that is able to initiate a re-request can be set.

It should be noted that, those skilled in the art can understand that the methods provided in embodiments of the disclosure can be performed separately or together with some methods in embodiments of the disclosure or some methods in the related art.

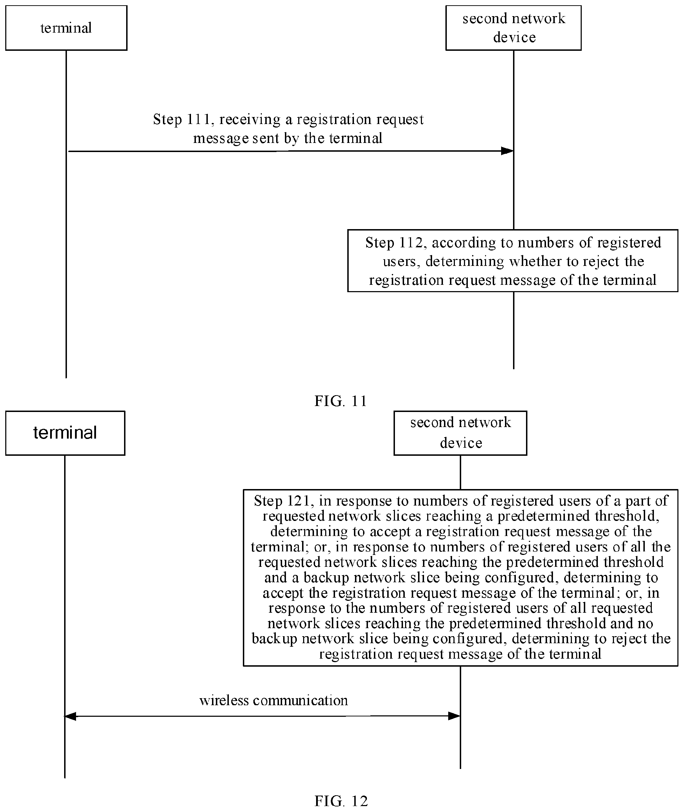

As shown in FIG. 11, a method for determining a number of registered users is provided in embodiments of the disclosure. The method is performed by a second network device, and the method includes following steps.

Step 111, a registration request message sent by a terminal is received.

Step 112, according to numbers of registered users, it is determined whether to reject the registration request message of the terminal.

In an embodiment, during a registration procedure of the terminal, if only partial slices of requested slices reach the maximum number of registered users after the AMF receives the response message, the AMF may send a registration acceptance message to the registered terminal. In the registration acceptance message, a slice identifier that is rejected due to an update is carried in a reject slice list, and a corresponding rejection reason is defined as the maximum number of users within the area for the slice has been reached. In an embodiment, a timer that is able to initiate a re-request can be set.

In an embodiment, if all requested slice S-NSSAI(s) in the request message sent by the AMF to the NSACF reach an allowable maximum value, and if one or more signed slices in signing information are marked as default slices and no update is required, the AMF may determine to place these default slices in to Allow NSSAI as authentication allowed slices. Otherwise, the AMF may reject the registration request (such as a registration request for the access type) of the user UE. In the registration rejection message, the AMF carries a list of rejection slice identifiers, with each slice accompanied by a corresponding rejection reason value, such as the allowable maximum number of registered users in the area of the slice is reached. In an embodiment, a timer that is able to initiate a re-request can be set.

It should be noted that, those skilled in the art can understand that the methods provided in embodiments of the disclosure can be performed separately or together with some methods in embodiments of the disclosure or some methods in the related art.

As shown in FIG. 12, a method for determining a number of registered users is provided in embodiments of the disclosure. The method is performed by a second network device, and the method includes following steps.

Step 121, in response to numbers of registered users of a part of requested network slices reaching a predetermined threshold, it is determined to accept a registration request message of a terminal;
or,
in response to numbers of registered users of all the requested network slices reaching the predetermined threshold and a backup network slice being configured, it is determined to accept the registration request message of the terminal;
   or,
in response to the numbers of registered users of all requested network slices reaching the predetermined threshold and no backup network slice being configured, it is determined to reject the registration request message of the terminal.

It should be noted that, when the numbers of registered users of a part of the requested network slice reach the predetermined threshold, the registration request message of the terminal may be accepted. For example, registration of the terminal may be rejected on a network slice whose number of registered users reaches the predetermined threshold, and registration of the terminal may be accepted on a network slice whose number of registered users does not reach the predetermined threshold. For example, the terminal requests to register on 4 slices, and the 4 slices are slice A, slice B, slice C, and slice D, respectively. If the numbers of registered users of slice A, slice B, and slice C reach the predetermined threshold, the registration request message of the terminal may be accepted. At this time, the registration of the terminal on the slice D can be accepted, but the registration of the terminal on the slice A, slice B and slice C may be rejected.

The predetermined threshold may be a maximum number of registered users or a maximum number of sessions. For example, it may be an actual value, such as an absolute value. It may also be a value corresponding to a ratio of the maximum number of users or sessions to a maximum capacity of the network, e.g., a relative value.

In an embodiment, the predetermined threshold may be determined according to a required network communication quality. For example, when the required network communication quality is better and more guaranteed, the predetermined threshold may be set to a smaller value; or, when the required network communication quality is lowered, the predetermined threshold may be set to a larger value.

It should be noted that, those skilled in the art can understand that the methods provided in embodiments of the disclosure can be performed separately or together with some methods in embodiments of the disclosure or some methods in the related art.

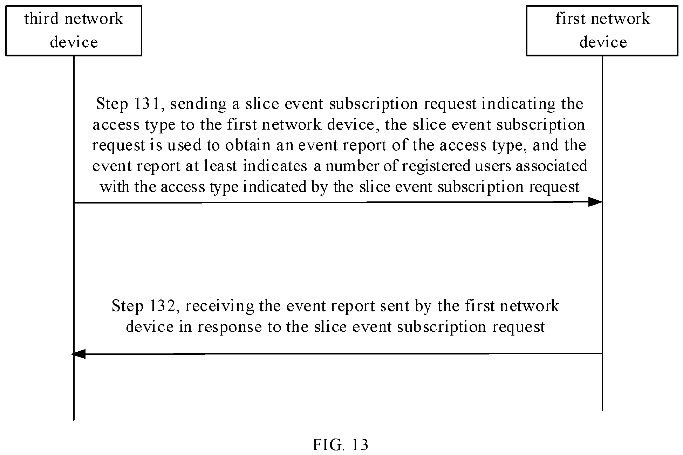

As shown in FIG. 13, a method for determining a number of registered users is provided in embodiments of the disclosure. The method is performed by a third network device, and the method includes following steps.

Step 131, a slice event subscription request indicating the access type is sent to the first network device, the slice event subscription request is used to obtain an event report of the access type, and the event report at least indicates a number of registered users associated with the access type indicated by the slice event subscription request.

Step 132, the event report sent by the first network device in response to the slice event subscription request is received.

The terminal involved in the present disclosure may include but is not limited to a mobile phone, a wearable device, an in-vehicle terminal, and a roadside unit (RSU), a smart home terminal, an industrial sensing device, and/or a medical device, etc. In this disclosure, the number of registered users can also have the meaning of "a number of registered terminals". In this disclosure, the slice can also have the meaning of "a network slice or a network slice instance".

The first network device involved in this disclosure may be a NSACF. It should be noted that the first network device in this disclosure is not limited to the NSACF, and can also be another communication node in a core network, which is not limited herein. One NSACF may be deployed for each network slice, or multiple NSACFs may be deployed for each network slice. If multiple NSACFs are deployed for each network slice, the NSACF involved in this disclosure is a certain NSACF of the multiple NSACFs. For example, the third network device in this disclosure may be an AF, but the third network device in the present disclosure is not limited to the AF, and may also be another communication node in a core network. In an embodiment, the access type includes at least one of the following:
a 3GPP access;
a non-3GPP access; or
a 3GPP and a non-3GPP access.

In an embodiment, the radio access type includes at least one of: an NR access, an evolved universal mobile communication system terrestrial radio access (EUTRA), a wireless local area network access (WLAN) access, a virtual network (VIRTUAL) access, a narrowband Internet of Things (NBIOT) access, a wired network (WIRELINE) access, a wired cable network (WIRELINE-CABLE) access, a wired broadband network (WIRELINE-BBF) access, an urban rail transit vehicle-terrestrial integrated communication system (LTE-M) access, a new radio unlicensed spectrum (NR_U) access, an evolved universal mobile communication system terrestrial unlicensed spectrum (EUTRA_U) radio access, a trusted N3GA access (TRUSTED_N3GA), a trusted wireless local area network (TRUSTED_WLAN) access, a universal terrestrial radio access (UTRA), a global mobile system edge radio access network (GERA) access, a new radio low earth orbit (NR_LEO) access, a new radio medium/high earth orbit (NR_MEO) access, a new radio geostationary earth orbit (NR_GEO) access, or a new radio other satellite (NR_OTHER_SAT) access.

In an embodiment, the AF sends a slice event subscription request to a NSACF, the slice event subscription request carries access type information, and an event report of an access type indicated by the access type information sent by the NSACF is received.

In an embodiment, the slice event subscription request is sent through a NEF, the event report is received through the NEF.

In an embodiment, when sending the slice event subscription request through the NEF and receiving the event report through the NEF, if the access type indicated by the access type information is associated with multiple NSACFs, the NEF may send the slice event subscription request to the multiple NSACFs. After receiving the event information, the NEF may perform aggregation statistics and report the aggregated information to the AF.

In an embodiment, the NEF performs the discovery and selection of the NSASF s through a network registration function (NRF), or the NEF performs the discovery and selection of the NSACFs through a local configuration.

In an embodiment, the NEF performs a mapping between application or service identifiers of the AF and slice identifiers. When the NEF receives the slice event subscription request from the AF, it maps the application or service identifier to the slice identifier and sends it to the NSACF. When receiving a time report from the NSACF, the NEF maps the slice identifier to an application or service identifier and send it to the AF.

In an embodiment, the slice event subscription request includes an event requested to be subscribed to, and the event includes at least one of: a number of registered terminals and a ratio of the number of registered terminals to an allowable maximum number of registered terminals.

In an embodiment, the slice event subscription request includes screening information of an event requested to be subscribed to. The screening information indicates a feature that needs to be reported. For example, the screening information indicates access type information. The access type information includes at least one of: an access type or a radio access type. The screening information may also indicate at least one of: a slice identifier, a combination of a slice identifier and a data network name.

In an embodiment, the slice event subscription request may also include a report mode of an event requested to be subscribed to. The reporting mode includes at least one of: a threshold for triggering reporting, and a periodic time interval for triggering reporting. An event report is reported when the threshold is reached or when the periodic time interval is reached.

In an embodiment, the slice event subscription request includes an immediate report flag indicates to report a requested event report immediately upon receipt of the request.

In an embodiment, in order to subscribe to from the NEF or cancel a reporting notification of a related number of terminals for a network slice type, the AF sends a Nnef_EventExposure subscribe/unsubscribe Request message to the NEF, and the message includes an event ID, an event filter, and event report information.

In an embodiment, the event ID parameter defines a subscribed event ID, i.e., a number of registered terminals, or a ratio of the number of registered terminals to the allowable maximum number of registered terminals, or both the number of registered terminals and the ratio of the number of registered terminals to the allowable maximum number of registered terminals.

In an embodiment, the event filter parameter defines a range in which reporting is required. Each range corresponds to an access type. The access type information includes at least one of: an access type, a radio access type, and access assistance information including an access type and a radio access type. In an embodiment, the event filter parameter further includes one of the following items: a slice identifier S-NSSAI, a combination of a slice identifier S-NSSAI and a data network name (DNN).

In an embodiment, the event report information parameter defines a reporting mode, and includes a threshold, or a periodic reporting including a periodic time interval. If the report information parameter is a threshold that triggers reporting, an event report is reported when the threshold is reached. If the report information parameter is a periodic time interval for triggering reporting, an event report is reported when the periodic time interval arrives. The subscribe requests may also include an immediate report flag indicating that the requested event report is reported immediately upon receipt of the request.

In an embodiment, when multiple NSACFs are deployed in a requested slice, the NEF performs aggregate statistics on reported messages after receiving information reported by the corresponding NSACFs, and reports the aggregated information to the requesting application function AF. In an embodiment, when there are multiple NSACFs, one of the NSACFs can be selected as a master NSACF or a proxy NSACF of corresponding NSACFs according to an operation policy or a NEF configuration, to perform subscription, collection and aggregation of related NSACF status information. When a NSACF is the master NSACF, other NSACFs in the slice are slave NSACFs. When a NSACF is a proxy NSACF, the NSACF does not have a master-slave relationship with other NSACFs in the slice.

In an embodiment, the NEF sends a response message Nnef_EventExposure_Subscribe/usubsubscribe Response to the AF. After receiving a slice event subscription request from the application function AF, the NEF subscribes to an event report of the requested slice from each NSACF of the requested slice, and sends the event report to the AF after receiving the event report of each NSACF. It should be noted that the NEF may query the NSACF(s) corresponding to slice request access type information through the NRF, or discover and select the NSACF(s) corresponding to the slice request access type information through a local configuration.

In an embodiment, if the NEF does not subscribed to the reporting event of the related Requested S-NSSAI from the NSACF(s) corresponding to the slice request access type information, the NEF initiates a subscription request to the NSACF corresponding to the slice request access type information supporting the Requested S-NSSAI, and sends a request message Nnef_SliceEventExposure_Subscribe/Unsubscribe request. The message includes an event ID, an event filter, event report information, etc. The NEF stores event report information requested by the AF. If UE slice admission control is performed by multiple NSACFs for the Requested S-NSSAI, the NEF can set the time report information as a periodic reporting in the subscribe request to each NSACF. If the UE slice admission control is performed by a single NSACF for the Requested S-NSSAI, the event report information set by the NEF itself is the same as the request received from the AF. The NEF may also set the event ID and the event filter information according to the content in the request message received from the AF.

In an embodiment, the NSACF sends a Nnsacf_SliceEventExposure_Subscribe/usubsubscribe response message to the NEF to confirm the subscribe request.

In an embodiment, when a report condition of subscription is met and the report event is triggered, the NSACF sends a trigger notification to the NEF to perform the reporting of the information related to the subscribed event.

In an embodiment, the NSACF sends a Nnsacf_SliceEvent Exposure_Notify message to the NEF, and the message carries parameters such as an event ID, an event filter, and event report information.

In an embodiment, when multiple NSACFs corresponding to the request access type information of the requested NSSAI perform the UE slice admission control, the NEF collects the reports of all NFACFs corresponding to the request access type, and performs number aggregation for a slice S-NSSAI in a request event filter (such as 3GPP/non-3GPP access type). When a report condition is met and the reporting is triggered, the NEF performs number reporting for the slice S-NSSAI in the requested event filter (such as 3GPP/non-3GPP access type).

When a single NSACF corresponding to the request access type information of the requested NSSAI performs the UE slice admission control, the NEF immediately returns a report notification to the AF, to report a usage report counted by the NEF, or performs a periodic reporting to the AF according to a periodic subscription.

In an embodiment, when a condition of the event report subscribed by the AF is triggered/satisfied, subscription reporting is triggered. The NEF sends a notification to the AF to report the subscribed related usage and information according to a subscription requirement, such as a number of UEs of the 3GPP access type of the slice, a number of UEs of the non-3GPP access type of the slice, or a number of UEs of a satellite access in the 3GPP access of the slice, etc., or to report a ratio of a corresponding number of UEs to an allowable maximum number at the same time, etc.

When the network does not exposure information such as a network slice identifier to the AF (such as an untrusted third-party AF), the NEF performs the mapping between the AF application or service identifiers and the slice identifiers. When the NEF receives the subscribe request from the AF, the NEF maps the application or service identifier to a slice identifier, and sends it to the NSACF. When the NEF receives a subscription event notification from the NSACF, the NEF maps the slice identifier to an identifier of an application or service, and sends it to the AF.

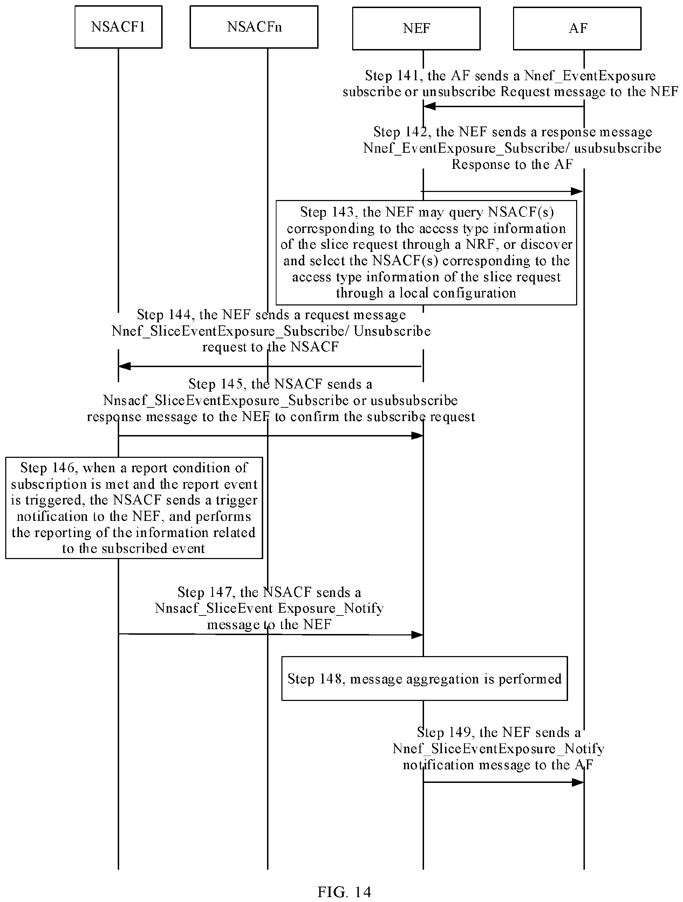

For example, to better understand embodiments of the present disclosure, referring to FIG. 14 , the notification procedure of the method for determining the number of registered users may include:

Step 141, an AF sends a Nnef_EventExposure subscribe or unsubscribe Request message to an NEF. To subscribe to from the NEF or cancel a reporting notification of a related number of terminals for a network slice access type, the AF sends a Nnef_EventExposure subscribe/unsubscribe Request message to the NEF, and the message includes an event ID, an event filter, and event report information. The reporting notification of the related number of terminals includes: a number of registered users associated with an access type. The numbers of registered users for different access types may be determined based on the access type information.

Step 142, the NEF sends a response message Nnef_EventExposure_Subscribe or usubsubscribe Response to the AF. After receiving a slice event subscription request from the AF, the NEF subscribes to a reporting event of the requested slice from each NSACF of the requested slice, and reports to the requesting AF after receiving information reported by each NSACF.

Step 143, the NEF may query NSACF(s) corresponding to the access type information of the slice request through a NRF, or discover and select the NSACF(s) corresponding to the access type information of the slice request through a local configuration.

Step 144, the NEF sends a request message Nnef_SliceEventExposure_Subscribe or Unsubscribe request to the NSACF. For example, if the NEF does not subscribed to a reporting event of a related Requested S-NSSAI from the NSACF(s) corresponding to the access type information of the slice request, the NEF initiates a subscribe request to the NSACF corresponding to the access type information of the slice request supporting the Requested S-NSSAI, and sends a request message Nnef_SliceEventExposure_Subscribe/Unsubscribe request. The message includes an event ID, an event filter, event report information, etc. The NEF stores event report information requested by the AF. If UE slice admission control is performed by multiple NSACFs for the Requested S-NSSAI, the NEF can set the time report information as a periodic reporting in the subscribe request to each NSACF. If the UE slice admission control is performed by a single NSACF for the Requested S-NSSAI, the event report information set by the NEF itself is the same as the request received from the AF. At the same time, the NEF may set the event ID and the event filter information according to the content in the request message received from the AF.

Step 145, the NSACF sends a Nnsacf_SliceEventExposure_Subscribe or usubsubscribe response message to the NEF to confirm the subscribe request.

Step 146, when a report condition of subscription is met and the report event is triggered, the NSACF sends a trigger notification to the NEF, and performs the reporting of the information related to the subscribed event.

Step 147, the NSACF sends a Nnsacf_SliceEvent Exposure_Notify message to the NEF, and the message carries parameters such as an event ID, an event filter, and event report information.

Step 148, message aggregation is performed. For example, when multiple NSACFs corresponding to the request access type information of the requested NSSAI perform the UE slice admission control,, the NEF collects the reports of all NFACFs corresponding to the request access type, and performs number aggregation for a slice S-NSSAI in a request event filter (such as the 3GPP/non-3GPP access type). When a report condition is met and the reporting is triggered, the NEF performs the number reporting for the slice S-NSSAI in the requested event filter (such as the 3GPP/non-3GPP access type).

When a single NSACF corresponding to the request access type information of the requested NSSAI performs the UE slice admission control, the NEF immediately returns a report notification to the AF, and reports a usage report counted by the NEF, or performs a periodic reporting to the AF according to a periodic subscription.

Step 149, the NEF sends a Nnef_SliceEventExposure_Notify notification message to the AF, and the notification message includes event report information. For example, when a condition of the event report subscribed by the AF is triggered/satisfied, subscription reporting is triggered. The NEF sends a notification to the AF to report the subscription related usage and information according to a subscription requirement, such as a number of UEs of the 3GPP access type of the slice, a number of UEs of the non-3GPP access type of the slice, or a number of UEs of a satellite access in the 3GPP access type of the slice, etc., or to report a ratio of a corresponding number of UEs to an allowable maximum number at the same time.

When the network does not exposure information such as a network slice identifier to the AF (such as an untrusted third-party AF), the NEF performs the request for mapping between the AF application or service identifiers and the slice identifiers. When the NEF receives the subscribe request from the AF, the NEF maps the application or service identifier to a slice identifier, and sends it to the NSACF. When the NEF receives a subscription event notification from the NSACF, the NEF maps the slice identifier to an identifier of an application or service, and sends it to the AF.

It should be noted that those skilled in the art can understand that the method provided in embodiments of the disclosure may be performed separately or together with some methods in embodiments of the disclosure or some methods in related art.

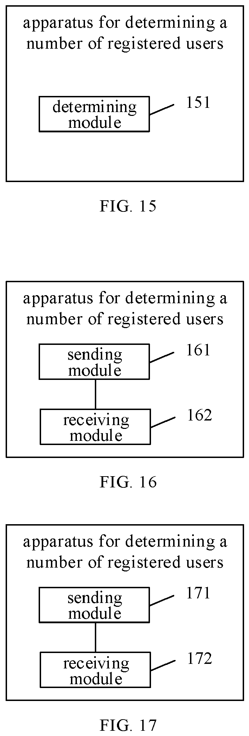

As shown in FIG. 15, an apparatus for determining a number of registered users is provided in embodiments of the disclosure. The apparatus includes:
a determining module 151, configured to determine a number of registered users for different access types based on the access type information.

The access type information indicates an access type of a terminal accessing the network slice. It should be noted that those skilled in the art can understand that the method provided in embodiments of the disclosure may be performed separately or together with some methods in embodiments of the disclosure or some methods in related art.

As shown in FIG. 16, an apparatus for determining a number of registered users is provided in embodiments of the disclosure. The apparatus includes:
a sending module 161, configured to send a request message for updating a number of users of a slice to a first network device; and
a receiving module 162, configured to receive a response message sent by the first network device, in which the response message carries information about that numbers of registered users for different access types of the slice reach a predetermined threshold and/or numbers of registered users for different access types.

It should be noted that those skilled in the art can understand that the method provided in embodiments of the disclosure may be performed separately or together with some methods in embodiments of the disclosure or some methods in related art.

As shown in FIG. 17, an apparatus for determining a number of registered users is provided in embodiments of the disclosure. The apparatus includes:
a sending module 171 is configured to send a slice event subscription request indicating an access type to a first network device; in which, the slice event subscription request is used to obtain an event report of the access type, and the event report at least indicates a number of registered users associated with the access type indicated by the slice event subscription request; and
a receiving module 172 is configured to receive the event report sent by the first network device for the slice event subscription request.

It should be noted that those skilled in the art can understand that the method provided in embodiments of the disclosure may be performed separately or together with some methods in embodiments of the disclosure or some methods in related art.

Embodiments of the disclosure provide a communication device, which includes:
a processor; and
a memory having instructions executable by the processor stored thereon.

The processor is configured to perform the method according to any embodiment of the disclosure when executing the executable instructions.

The processor may include various types of storage media, which are non-transitory computer storage media, and can continue to memorize and store information thereon after the communication device is powered off.

The processor can be connected to the memory through a bus or the like, and is used to read an executable program stored in the memory.

Embodiments of the disclosure provide a computer storage medium having a computer-executable program stored thereon. When the computer-executable program is executed by a processor, the method according to any embodiment of the disclosure is performed.

Regarding the apparatus in the foregoing embodiments, the specific manner in which each module executes operations has been described in detail in embodiments related to the method, and will not be described in detail here.

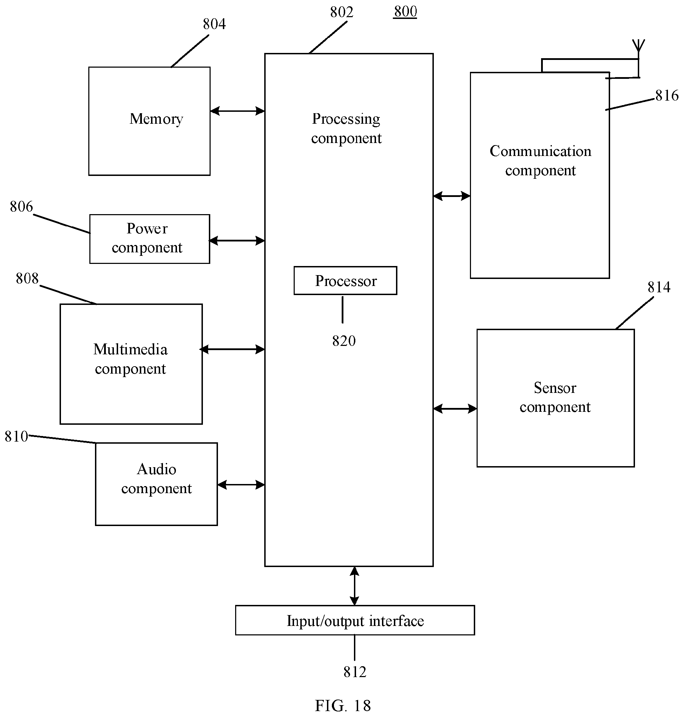

As shown in FIG. 18, embodiments of the disclosure provide a terminal structure.

Referring to a terminal 800 shown in FIG. 18, the embodiment provides a terminal 800, which specifically can be a mobile phone, a computer, a digital broadcast terminal, a messaging device, a game console, a tablet device, a medical device, a fitness device, a personal digital assistant, etc.

Referring to FIG. 18, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls overall operations of the terminal 800, such as operations associated with display, telephone calls, data communications, camera operations, and recording operations. The processing component 802 may include one or more processors 820 to execute instructions to complete all or part of the steps of the above method. Additionally, the processing component 802 may include one or more modules that facilitate interaction between the processing component 802 and other components. For example, the processing component 802 may include a multimedia module to facilitate interaction between the multimedia component 808 and processing component 802.

The memory 804 is configured to store various types of data to support operations at the terminal 800. Examples of such data include instructions for any application or method operated on the terminal 800, contact data, phonebook data, messages, pictures, videos, etc. The memory 604 can be implemented using any type of volatile or non-volatile storage device or a combination thereof, such as a static random access memory (SRAM), an electrically-erasable programmable read-only memory (EEPROM), an erasable programmable read-only memory (EPROM), a programmable read-only memory (PROM), a read only memory (ROM), a magnetic memory, a flash memory, a magnetic or optical disk.

The power component 806 provides power to various components of the terminal 800. The power component 806 may include a power management system, one or more power supplies, and any other components associated with the generation, management, and distribution of power in the terminal 800.

The multimedia component 808 includes a screen providing an output interface between the terminal 800 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense a boundary of a touch or a swipe action, but also detect a duration and a pressure associated with the touch or swipe operation. In some embodiments, the multimedia component 808 includes a front-facing camera and/or a rear-facing camera. When the terminal 800 is in an operating mode, such as a shooting mode or a video mode, the front-facing camera and/or the rear-facing camera can receive external multimedia data. Each front-facing camera and/or rear-facing camera can be a fixed optical lens system or has focal length and optical zoom capability.

The audio component 810 is configured to output and/or input audio signals. For example, the audio component 810 includes a microphone (MIC) configured to receive an external audio signal when the terminal 800 is in an operating mode, such as a call mode, a recording mode and a voice recognition mode. The received audio signal may be further stored in memory 804 or transmitted via the communication component 816. In some embodiments, the audio component 810 also includes a speaker for outputting audio signals.

The I/O interface 812 provides an interface between the processing component 802 and a peripheral interface module, such as a keyboard, a click wheel, a button, and the like. These buttons may include, but are not limited to, a home button, a volume button, a start button, and a locking button.

The sensor component 814 includes one or more sensors for providing status assessments of various aspects of the terminal 800. For example, the sensor component 814 can detect an open/closed state of the device 800, relative positioning of components, such as the display and the keypad of the terminal 800, a change in a position of the terminal 800 or a component of the terminal 800, a presence or absence of a user contact with the terminal 800, an orientation of the terminal 800, an acceleration/deceleration of the terminal 800, and a temperature change of the terminal 800. The sensor component 814 may include a proximity sensor configured to detect the presence of nearby objects without any physical contact. The sensor component 814 may also include an optical sensor, such as a Complementary Metal Oxide Semiconductor (CMOS) or Charge-Coupled Device (CCD) image sensor, for use in imaging applications. In some embodiments, the sensor component 814 may also include an acceleration sensor, a gyroscope sensor, a magnetic sensor, a pressure sensor or a temperature sensor.

The communication component 816 is configured to facilitate wired or wireless communication between the terminal 800 and other devices. The terminal 800 can access a wireless network based on a communication standard, such as Wi-Fi, 2G or 3G, or a combination thereof. In an embodiment, the communication component 816 receives a broadcast signal from an external broadcast management system or broadcast related information via a broadcast channel. In an embodiment, the communication component 816 also includes a near field communication (NFC) module to facilitate short-range communication. For example, the NFC module may be implemented based on a Radio Frequency Identification (RFID) technology, an Infrared Data Association (IrDA) technology, an Ultra Wide Band (UWB) technology, a Bluetooth (BT) technology and other technologies.

In an embodiment, the terminal 800 may be implemented by one or more application specific integrated circuits (ASICs), digital signal processors (DSPs), digital signal processing devices (DSPDs), programmable logic devices (PLDs), field programmable gate array s (FPGA), controllers, microcontrollers, microprocessors or other electronic components for performing the methods described above.

In an exemplary embodiment, there is also provided a non-transitory computer-readable storage medium including instructions, such as the memory 804 including instructions, which can be executed by the processor 820 of the terminal 800 for performing the above method. For example, the non-transitory computer readable storage medium may be a ROM, a random access memory (RAM), a CD-ROM, a magnetic tape, a floppy disk, an optical data storage device, and the like.

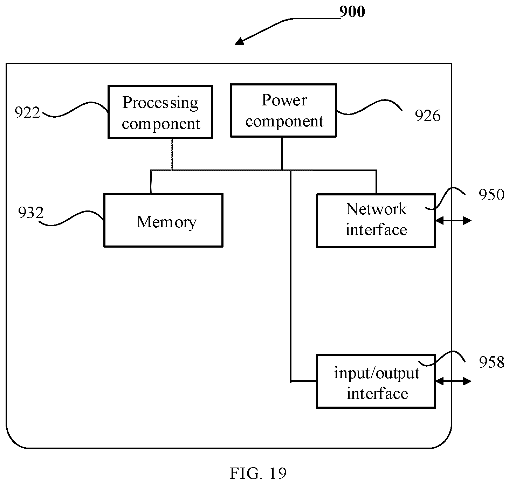

As shown in FIG. 19, embodiments of the disclosure provide a structure of a base station. For example, the base station 900 may be provided as a network side device. Referring to FIG. 19, the base station 900 includes a processing component 922, which further includes one or more processors, and memory resources represented by a memory 932 for storing instructions executable by the processing component 922, such as an application program. The application program stored in the memory 932 may include one or more modules each corresponding to a set of instructions. In addition, the processing component 922 is configured to execute the instructions, to perform any of the aforementioned methods that are applicable to the base station.

The base station 900 may also include a power component 926 configured to perform power management of the base station 900, a wired or wireless network interface 950 configured to connect the base station 900 to a network, and an input-output (I/O) interface 958. The base station 900 can operate based on an operating system stored in the memory 932, such as Windows Server^{™}, Mac OS X^{™}, Unix^{™}, Linux^{™}, FreeBSD^{™} or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for determining a number of registered users, performed by a first network device, comprising:
determining numbers of registered users for different access types based on access type information;
wherein the access type information indicates an access type of a terminal accessing a network slice.

2. The method of claim 1, wherein the access type information comprises at least one of:
access type information configured on the first network device;
access type information obtained from a consumer network function;
access type information configured by an operation administration and maintenance (OAM) system; or
access type information obtained from an access and mobility management function (AMF).

3. The method of claim 1, wherein the access type information indicates at least one of:
an access type;
a radio access type (RAT); or
access assistance information (addAccessinfo).

4. The method of claim 3, wherein the access type comprises at least one of:
a third generation mobile communication partner project (3GPP) access;
a non-3GPP access; or
a 3GPP and a non-3GPP access.

5. The method of claim 3, wherein the radio access type comprises at least one of: a new radio (NR) access, an evolved universal mobile communication system terrestrial radio access (EUTRA), a wireless local area network access (WLAN) access, a virtual network (VIRTUAL) access, a narrowband Internet of Things (NBIOT) access, a wired network (WIRELINE) access, a wired cable network (WIRELINE-CABLE) access, a wired broadband network (WIRELINE-BBF) access, an urban rail transit vehicle-terrestrial integrated communication system (LTE-M) access, a new radio unlicensed spectrum (NR_U) access, an evolved universal mobile communication system terrestrial unlicensed spectrum (EUTRA_U) radio access, a trusted N3GA access (TRUSTED_N3GA), a trusted wireless local area network (TRUSTED_WLAN) access, a universal terrestrial radio access (UTRA), a global mobile system edge radio access network (GERA) access, a new radio low earth orbit (NR_LEO) access, a new radio medium/high earth orbit (NR_MEO) access, a new radio geostationary earth orbit (NR_GEO) access, or a new radio other satellite (NR_OTHER_SAT) access.

6. The method of claim 1, further comprising:
updating the numbers of registered users for different access types in response to the terminal performing a predetermined procedure;
wherein, the preset procedure comprises one of:
a registration procedure of the terminal;
a configuration update procedure of the terminal; or
a deregistration procedure of the terminal.

7. The method of claim 6, wherein updating the numbers of registered users for different access types in response to the terminal performing the predetermined procedure comprises:
updating the numbers of registered users for different access types in response to the terminal performing the predetermined procedure and receiving a request message for updating a number of users of a slice sent by a second network device;
wherein the request message for updating the number of users of the slice indicates increasing or decreasing the number of registered users.

8. The method of claim 7, further comprising:
sending a response message of the request message for updating the number of users of the slice to the second network device;
wherein the response message carries information about that a number of registered users of an access type reaches a predetermined threshold and/or a number of registered users associated with an access type.

9. The method of claim 1, further comprising:
in response to receiving a slice event subscription request indicating an access type sent by an application function (AF), sending an event report of the access type to the AF; wherein the event report at least indicates a number of registered users associated with the access type.

10. A method for determining a number of registered users, performed by a second network device, comprising:
sending a request message for updating a number of users of a slice to a first network device; and
receiving a response message sent by the first network device, wherein the response message carries information about that numbers of registered users for different access types of the slice reach a predetermined threshold and/or numbers of registered users for different access types.

11. The method of claim 10, wherein the access type comprises at least one of:
a third generation mobile communication partner project (3GPP) access;
a non-3GPP access; or
a 3GPP and a non-3GPP access.

12. The method of claim 11, wherein the radio access type comprises at least one of: a new radio (NR) access, an evolved universal mobile communication system terrestrial radio access (EUTRA), a wireless local area network access (WLAN) access, a virtual network (VIRTUAL) access, a narrowband Internet of Things (NBIOT) access, a wired network (WIRELINE) access, a wired cable network (WIRELINE-CABLE) access, a wired broadband network (WIRELINE-BBF) access, an urban rail transit vehicle-terrestrial integrated communication system (LTE-M) access, a new radio unlicensed spectrum (NR_U) access, an evolved universal mobile communication system terrestrial unlicensed spectrum (EUTRA_U) radio access, a trusted N3GA access (TRUSTED _N3GA), a trusted wireless local area network (TRUSTED_WLAN) access, a universal terrestrial radio access (UTRA), a global mobile system edge radio access network (GERA) access, a new radio low earth orbit (NR_LEO) access, a new radio medium/high earth orbit (NR_MEO) access, a new radio geostationary earth orbit (NR_GEO) access, or a new radio other satellite (NR_OTHER_SAT) access.

13. The method of claim 10, further comprising:
receiving a registration request message sent by a terminal; and
determining whether to reject the registration request message of the terminal based on the number of registered users.

14. The method of claim 13, wherein determining whether to reject the registration request message of the terminal based on the number of registered users comprises:
determining to accept the registration request message of the terminal in response to numbers of registered users of partial network slices of requested network slices reaching a predetermined threshold;
or,
determining to accept the registration request message of the terminal in response to numbers of registered users of all the requested network slices reaching a predetermined threshold and a backup network slice being configured;
or,
determining to reject the registration request message of the terminal in response to numbers of registered users of all the requested network slices reaching a predetermined threshold and no backup network slice being configured.

15. A method for determining a number of registered users, performed by a third network device, comprising:
sending a slice event subscription request indicating an access type to a first network device; wherein, the slice event subscription request is used to obtain an event report of the access type, and the event report at least indicates a number of registered users associated with the access type indicated by the slice event subscription request; and
receiving the event report sent by the first network device for the slice event subscription request.

16. The method of claim 15, the access type comprises at least one of:
a third generation mobile communication partner project (3GPP) access;
a non-3GPP access; or
a 3GPP and a non-3GPP access.

17. The method of claim 16, wherein the radio access type comprises at least one of: a new radio (NR) access, an evolved universal mobile communication system terrestrial radio access (EUTRA), a wireless local area network access (WLAN) access, a virtual network (VIRTUAL) access, a narrowband Internet of Things (NBIOT) access, a wired network (WIRELINE) access, a wired cable network (WIRELINE-CABLE) access, a wired broadband network (WIRELINE-BBF) access, an urban rail transit vehicle-terrestrial integrated communication system (LTE-M) access, a new radio unlicensed spectrum (NR_U) access, an evolved universal mobile communication system terrestrial unlicensed spectrum (EUTRA_U) radio access, a trusted N3GA access (TRUSTED _N3GA), a trusted wireless local area network (TRUSTED_WLAN) access, a universal terrestrial radio access (UTRA), a global mobile system edge radio access network (GERA) access, a new radio low earth orbit (NR_LEO) access, a new radio medium/high earth orbit (NR_MEO) access, a new radio geostationary earth orbit (NR_GEO) access, or a new radio other satellite (NR_OTHER_SAT) access.

18. An apparatus for determining a number of registered users, comprising:
a determining module, configured to determine numbers of registered users for different access types based on access type information;
wherein the access type information indicates an access type of a terminal accessing a network slice.

19. An apparatus for determining a number of registered users, comprising:
a sending module, configured to send a request message for updating a number of users of a slice to a first network device; and
a receiving module, configured to receive a response message sent by the first network device, wherein the response message carries information about that numbers of registered users for different access types of the slice reach a predetermined threshold and/or numbers of registered users for different access types.

20. An apparatus for determining a number of registered users, comprising:
a sending module, configured to send a slice event subscription request indicating an access type to a first network device; wherein, the slice event subscription request is used to obtain an event report of the access type, and the event report at least indicates a number of registered users associated with the access type indicated by the slice event subscription request; and
a receiving module, configured to receive the event report sent by the first network device for the slice event subscription request.

21. A communication device, comprising:
a memory; and
a processor connected with the memory, configured to perform the method of any of claims 1 to 9, 10-14, or 15-17 by executing computer-executable instructions stored on the memory.

22. A computer-readable storage medium having computer-executable instructions stored thereon, wherein when the computer-executable instructions are executed by a processor, the method of any of claims 1 to 9, 10-14, or 15-17 is performed.
